# EUROPÄISCHE PATENTSCHRIFT

(11) **EP 2 241 481 B1**
(45) Veröffentlichungstag und Bekanntmachung des Hinweises auf die Patenterteilung: **01.01.2014**
(21) Anmeldenummer: 10003504.7
(22) Anmeldetag: 31.03.2010
(51) Int. Cl.: B60R 21/00

(54) **Verfahren zur Steuerung von wenigstens einem Insassenrückhaltesystem eines Kraftfahrzeugs und Kraftfahrzeug**
Method for controlling at least one passenger retention system of a motor vehicle and motor vehicle
Procédé de commande d'au moins un système de retenue des passagers d'un véhicule automobile et véhicule automobile

(30) Priorität: 14.04.2009 DE 102009017349
(43) Veröffentlichungstag der Anmeldung: 20.10.2010
(73) Patentinhaber: Audi AG, 85045 Ingolstadt (DE)
(72) Erfinder: Weiss, Christian, 85113 Böhmfeld (DE); Saulich, Sigrid, 85051 Ingolstadt (DE)
(74) Vertreter: Thielmann, Frank

(56) Entgegenhaltungen:
- EP-A1- 2 110 286
- EP-A2- 0 649 776
- WO-A1-2009/022685
- DE-A1- 10 333 993
- DE-A1- 19 909 538
- DE-A1-102005 005 959
- DE-A1-102006 020 192

## Beschreibung

Die Erfindung betrifft ein Verfahren zur Steuerung von wenigstens einem Insassenrückhaltesystem eines Kraftfahrzeugs, insbesondere wenigstens eines Airbags und/oder wenigstens eines Gurtstraffers und/oder eines Überrollbügels, wobei durch Beurteilung von ersten Sensordaten anhand wenigstens eines ersten Kriteriums eine das Vorliegen eines Unfalls angebende Unfallinformation und/oder ein Unfallschwerewert ermittelt und das Insassenrückhaltesystem unter Berücksichtigung der Unfallinformation und/oder des Unfallschwerewerts angesteuert wird, wobei zweite Sensordaten wenigstens eines im Dachbereich des Kraftfahrzeugs angeordneten, unfallbezogenen Dachsensors ermittelt und bei der Steuerung des Insassenrückhaltesystems berücksichtigt werden.

Moderne Kraftfahrzeuge, insbesondere Personenkraftwagen (PKW), weisen häufig eine Sensorik auf, die mit der Aktivierung von Insassenrückhaltesystemen, insbesondere Airbags und Gurtstraffer, verkoppelt ist und eine Kollision möglichst früh erkennen soll. Dabei ist es bekannt, Beschleunigungsund/oder Drucksensoren zur Kollisionserkennung im vorderen Bereich des Kraftfahrzeugs anzuordnen; häufig sind Steuergeräte für Airbags selbst mit zwei Beschleunigungssensoren bestückt, wobei ein Sensor in Fahrzeuglängsrichtung, der andere in Fahrzeugquerrichtung misst.

In einem wenigstens einem Insassenrückhaltesystem zugeordneten Steuergerät wertet eine Kollisionserkennungssoftware (Crashalgorithmus) die Sensordaten kontinuierlich aus und entscheidet, ob es sich um eine normale Fahrsituation oder eine Unfallsituation handelt. Im Falle eines Unfalls ist es bekannt, auch die zu erwartende Unfallschwere als einen Unfallschwerewert zu prognostizieren. Beim Überschreiten eines festgelegten Schwellwerts werden durch das Steuergerät das oder die passenden Rückhaltesysteme (beispielsweise Gurtstraffer, Frontairbags, Seitenairbags, Kopfairbags, Überrollbügel bei Cabrios, ...) aktiviert.

Zur Verbesserung der Unfallerkennung sind hochwertige Fahrzeuge häufig mit zusätzlichen externen Satellitensensoren in den Deformationszonen im Vorderwagen ausgestattet, die frühzeitig Unfalldaten liefern können. Zur verbesserten Erkennung von Frontalunfällen werden diese Sensoren im Vorderwagen im Bereich Frontend, Scheinwerfer oder Längsträger angebracht. Als Bedingung für eine Auslösung der Insassenrückhaltesysteme müssen sowohl die Sensordaten der ausgelagerten Satellitensensoren als auch die Sensordaten der Beschleunigungssensoren, die beispielsweise im Steuergerät angeordnet sein können, bestimmte Schwellwerte überschreiten. Selbstverständlich ist hier wie auch in der weiteren Anmeldung der Begriff "Sensordaten" nicht nur auf das Rohsignal, sondern auch auf gegebenenfalls aus diesen Sensordaten abgeleitete Werte zu beziehen.

Die heute bekannten Verfahren zur Steuerung von Insassenrückhaltesystemen eines Personenkraftwagens arbeiten sehr gut für Frontalunfälle, bei denen der Unfallgegner Kräfte in den Fahrzeuglängsträger einleitet und Deformationen im Vorderwagen im Bereich der ausgelagerten Satellitensensoren entstehen. Eine schlechtere Effizienz zeigt sich jedoch, wenn die Längsträgerstruktur nicht betroffen wird und die Bereiche, in denen die Satellitensensoren angebracht sind, nicht direkt beaufschlagt werden. Dieses Problem tritt insbesondere bei sogenannten Unterfahrt-Unfällen auf, die beispielsweise bei der Auffahrt eines Personenkraftwagens auf einen Lastkraftwagen (LKW) auftreten können. Aufgrund der unterschiedlichen Höhe der Trägerstrukturen von PKW und LKW bauen sich die Fahrzeugverzögerungen im PKW sehr langsam auf, wodurch eine Auslösung von Insassenrückhaltesystemen deutlich erschwert beziehungsweise verzögert oder gar unterdrückt wird.

DE 10 2005 005 959 A1 betrifft eine Vorrichtung und ein Verfahren zum Steuern einer Sicherheitsvorrichtung eines Fahrzeugs. Dabei wird ein Precrash-Sensor verwendet, um Kollisionsobjekten aufgrund charakteristischer Merkmale bestimmter Objektklassen zu orten, woraufhin die Auslösezeit und/oder Auslöseintensitäten von einem oder mehreren Schutzmitteln der Sicherheitsvorrichtung angepasst werden können. Der Precrash-Sensor kann im Bereich des Rückspiegels im Fahrzeuginnenraum montiert sein und den Bereich vor dem Fahrzeug erfassen. Er misst den Abstand zu einem Kollisionsobjekt.

DE 10 2006 020 192 A1 betrifft eine Vorrichtung und ein Verfahren zum Vorhersagen von Kollisionen. Dabei werden mehrere Sensoren verwendet, umein Objekt vor einem Fahrzeug zu ermitteln. Einer der Sensoren kann eine Kamera sein, die ein Bild der Vorderseite des Fahrzeugs aufnimmt und hinter der Windschutzscheibe des Kraftfahrzeugs angeordnet sein kann.

WO 2009/022685 A1 betrifft eine Schutzvorrichtung für Insassen eines Fahrzeugs. Dabei wird eine Kollision vorhergesagt und vor der Kollision verschiedene Schritte der Sicherheit am Sitz eingeleitet. Eine Stereokamera ist in der Nähe einer Mitte eine Oberseite einer vorderen Windschutzscheibe vorgesehen. Diese führt Kollisionsvorhersagen durch

Der Erfindung liegt daher die Aufgabe zugrunde, ein Verfahren und ein Kraftfahrzeug anzugeben, mit dem auch Unterfahrt-Unfälle, bei denen am Vorderwagen erst spät Deformationen auftreten, verlässlich erkannt und Insassenrückhaltesysteme im Kollisionsfall verlässlich aktiviert werden können.

Zur Lösung dieser Aufgabe ist bei einem Verfahren der eingangs genannten Art erfindungsgemäß vorgesehen, dass als Dachsensor ein Beschleunigungssensor verwendet wird, wobei der Dachsensor als zweite Sensordaten die Beschleunigung in einer senkrecht zur Windschutzscheibe des Kraftfahrzeugs stehenden Richtung ermittelt.

Das erfindungsgemäße Verfahren, das mit besonderem Vorteil bei Personenkraftwagen angewandt wird, schlägt also vor, einen weiteren Sensor, den Dachsensor, im Dachbereich des Kraftfahrzeugs anzuordnen, wo bei einem Unterfahrt-Unfall zuerst starke Deformationen auftreten. So können Unfälle mit "inkompatiblen" Unfallgegnern, wie beispielsweise LKW, Traktoren, Anhängern und Aufliegern mit hohen Ladekanten, besser erkannt werden. Die zweiten Sensordaten können dabei in zweierlei Hinsicht bei der Steuerung der Insassenrückhaltesysteme berücksichtigt werden, nämlich einmal unmittelbar, indem sie beispielsweise in die Ermittlung der Unfallinformation und/oder des Unfallsschwerewerts unmittelbar eingebunden werden, zum anderen kann aber auch vorgesehen sein, dass sie insbesondere nach Beurteilung durch wenigstens ein zweites Kriterium zur Anpassung des oder wenigstens eines ersten Kriteriums und/oder wenigstens eines Aktivierungsschwellwerts verwendet werden, so dass beispielsweise Schwellwerte für die Aktivierung der Insassenrückhaltesysteme angepasst werden können, wenn ungewöhnlich hohe Beschleunigungen im Dachbereich gemessen werden. Insbesondere kann dann ein zweites Kriterium vorgesehen sein, so dass die zweiten Sensordaten beispielsweise nur dann beachtet werden, wenn sie selber einen bestimmten Schwellwert überschreiten oder ein komplexeres Kriterium erfüllen, das auf einen Unfall, insbesondere einen Unterfahrt-Unfall, hindeutet. Insgesamt soll es aber möglich werden, auch bei einem Unfall, der nicht unmittelbar auf den Vorderwagen oder in einem Steuergerät angeordnete Beschleunigungssensoren einwirkt, für eine rechtzeitige Aktivierung der Insassenrückhaltesysteme zu sorgen.

Ein weiterer Vorteil des erfindungsgemäßen Verfahrens ist, dass keine allzu große Modifikation an dem Kraftfahrzeug, insbesondere den Personenkraftwagen, vorgenommen werden muss, da ein solcher weiterer Sensor keine zu hohen Kosten erzeugt.

Mit besonderem Vorteil kann als Dachsensor ein am Dachquerträger des Kraftfahrzeugs angeordneter Sensor verwendet werden. Dieser Einbauort bietet sich besonders an, da dort die Deformationen beim Unterfahrt-Unfall zunächst auftreten und sich ohnehin ein guter Befestigungspunkt bietet.

Als Dachsensor wird ein Beschleunigungssensor verwendet. Dieser hat den Vorteil, dass er zum einen wenig Bauraums bedarf, zum anderen auch keinen unmittelbaren Kollisionskontakt benötigt, sondern Verformungen auch über die Beschleunigung messen kann. Dabei ist vorgesehen, dass der Dachsensor als zweite Sensordaten die Beschleunigung in einer senkrecht zur Windschutzscheibe des Kraftfahrzeugs stehenden Richtung ermittelt. Da der Aufprall bei Unterfahrt-Unfällen meist im Bereich der Windschutzscheibe erfolgt, ist es genau diese, die sich letztlich auf die Insassen des Kraftfahrzeugs zu bewegt. Daher wirken hier die relevanten Kräfte, so dass eine Messung in dieser Richtung vorteilhaft ist. Es sei jedoch angemerkt, dass selbstverständlich auch vorgesehen sein kann, beispielsweise mehrere Beschleunigungssensoren als Dachsensor zu verwenden, die beispielsweise Signale in Fahrzeuglängsrichtung und in vertikaler Richtung aufnehmen, die dann entsprechend ausgewertet werden können.

Selbstverständlich sind grundsätzlich auch andere Sensorarten als Dachsensor denkbar, beispielsweise Deformationssensoren, Drucksensoren, Kontaktsensoren und dergleichen, die jedoch in den meisten Fällen entweder einen bestimmten Bauraum benötigen und/oder in ihrem Messbereich eingeschränkt sein können.

Bezüglich der ersten Sensoren kann vorgesehen sein, dass zur Steuerung ein wenigstens einem Insassenrückhaltesystem zugeordnetes Steuergerät mit zwei in dem Steuergerät angeordneten, insbesondere die Beschleunigung in Querrichtung und in Längsrichtung des Kraftfahrzeugs messenden, erste Sensordaten liefernden Beschleunigungssensoren verwendet wird. Wie bereits einleitend beschrieben, ist die Verwendung solcher Sensoren als erste Sensoren durchaus üblich und es wird, wenn festgestellt wurde, dass ein Unfall vorliegt, häufig mit Schwellwerten gearbeitet, die das Auslösen des Insassenrückhaltesystems bestimmen. Dann kann mit besonderem Vorteil vorgesehen sein, dass die zweiten Sensordaten zur Anpassung von Schwellwerten der ersten Sensordaten verwendet werden, das bedeutet, dass bei einem möglichen Unfall im Dachbereich des Kraftfahrzeugs anzeigenden zweiten Sensordaten die Schwellwerte zur Auslösung des Insassenrückhaltesystems nach unten angepasst werden können.

Es sei an dieser Stelle noch angemerkt, dass auch grundsätzlich, wie bereits erwähnt, die zweiten Sensordaten zur Anpassung wenigstens eines die Auslösung der Insassenrückhaltesysteme bestimmenden Aktivierungsschwellwerts, beispielsweise eines Schwellwerts für den Unfallschwerewert, herangezogen werden können.

Mit besonderem Vorteil können bei der Ermittlung der Unfallinformation und/oder des Unfallschwerewerts als erste Sensordaten auch Daten wenigstens eines Umfeldsensors des Kraftfahrzeugs, insbesondere einer Kamera und/oder eines Radar-Sensors und/oder eines Lidar-Sensors, berücksichtigt werden. Es sind im Stand der Technik bereits viele Varianten bekannt, um beispielsweise Objekte aus den Daten von Umfeldsensoren, beispielsweise aus einem Kamerabild, identifizieren zu können, mithin auch für einen Unterfahrt- Unfall kritische Objekte wie beispielsweise LKW oder Auflieger. Solche bei vielen Kraftfahrzeugen, insbesondere im Rahmen von Fahrerassistenzsystemen wie beispielsweise ACC-Systemen (automatische Abstandshaltersysteme) verwendeten Umfeldsensoren können also besonders vorteilhaft auch zur Steuerung von Insassenrückhaltesystemen mit berücksichtigt werden. Sie eignen sich aufgrund ihrer Möglichkeit, ebenso auf Unterfahrt-Unfälle bezogene Informationen sammeln zu können, zur Durchführung einer Plausibilitätsprüfung der zweiten Sensordaten. So kann vorgesehen sein, dass ein das Vorliegen eines Unterfahrt-Unfalls anzeigender Wert aus den Daten des Umfeldsensors ermittelt und insbesondere im Rahmen einer Plausibilitätsprüfung von zweiten Sensordaten verwendet wird. Damit kann die Erkenntnis, dass ein Unfall vorliegt, gesichert werden, so dass Fehlansteuerungen vermieden werden können.

Neben dem erfindungsgemäßen Verfahren betrifft die Erfindung auch ein Kraftfahrzeug, umfassend wenigstens ein Insassenrückhaltesystem, wenigstens einen ersten Sensor zur Aufnahme unfallbezogener erster Sensordaten, wenigstens einen im Dachbereich des Kraftfahrzeugs angeordneten Dachsensor zur Aufnahme unfallbezogener zweiter Sensordaten und wenigstens ein wenigstens einem Insassenrückhaltesystem zugeordnetes, insbesondere zur Durchführung des erfindungsgemäßen Verfahrens ausgebildetes Steuergerät, welches Steuergerät zur Ansteuerung des Insassenrückhaltesystems unter Berücksichtigung der ersten und der zweiten Sensordaten ausgebildet ist, welches sich dadurch auszeichnet, dass der Dachsensor (13) ein Beschleunigungssensor ist, der zur Messung der Beschleunigung in einer senkrecht zur Windschutzscheibe (11) des Kraftfahrzeugs (1) stehenden Richtung ausgebildet ist. Es wird demnach vorgeschlagen, zusätzlich zu den schon bekannten Sensoren, beispielsweise den im Steuergerät selbst verbauten Sensoren und/oder Satellitensensoren im Vorderwagenbereich, einen Dachsensor vorzusehen, der unfallbezogene zweite Sensordaten liefert. Insbesondere, was Unfallfahrt-Unfälle angeht, kann durch einen solchen Dachsensor verbesserte Information über eine möglicherweise vorliegende Kollision im Windschutzscheiben- oder Dachbereich des Kraftfahrzeugs gewonnen werden. Diese zweiten Sensordaten können dann, ergänzend zu den ersten Sensordaten, die meist anhand von Kriterien zur Ermittlung einer das Vorliegen eines Unfalls angebenden Unfallinformation und/oder eines Unfallschwerewerts ausgewertet werden, bei der Ansteuerung der Insassenrückhaltesysteme berücksichtigt werden, wozu das Steuergerät ausgebildet ist. Dabei kann die Berücksichtigung der zweiten Sensordaten entweder mittelbar, indem, insbesondere nach Beurteilung durch wenigstens ein zweites Kriterium, das oder wenigsten ein erstes Kriterium und/oder wenigstens ein Aktivierungsschwellwert angepasst wird, oder unmittelbar, das heißt, als zusätzliche Information zur Ermittlung der Unfallinformation oder des Unfallschwerewerts eingehend, berücksichtigt werden. Beispielsweise können Aktivierungsschwellen bei einen möglichen Unterfahrt-Unfall anzeigenden zweiten Sensordaten angepasst, insbesondere gesenkt, werden.

Da das Steuergerät insbesondere zur Durchführung des erfindungsgemäßen Verfahrens ausgebildet sein kann, lassen sich sämtliche diesbezüglichen Ausführungen selbstverständlich auch auf das erfindungsgemäße Kraftfahrzeug übertragen.

Mit besonderem Vorteil kann vorgesehen sein, dass der Dachsensor am Dachquerträger des Kraftfahrzeugs angeordnet ist. Dort findet sich eine gute Befestigungsmöglichkeit.

Der Dachsensor ist ein Beschleunigungssensor, der zur Messung der Beschleunigung in einer senkrecht zur Windschutzscheibe des Kraftfahrzeugs stehenden Richtung ausgebildet ist. Ein Beschleunigungssensor benötigt, wie bereits dargelegt, relativ wenig Raum und keinen direkten Kontakt bei einer Kollision. Selbstverständlich sind auch hier andere Sensoren denkbar.

Schließlich kann vorgesehen sein, dass in dem Steuergerät zwei insbesondere die Beschleunigung in Querrichtung und in Längsrichtung des Kraftfahrzeugs messende, erste Sensordaten liefernde Beschleunigungssensoren angeordnet sind und/oder das Kraftfahrzeug wenigstens einen ersten Sensordaten liefernden Umfeldsensor, insbesondere eine Kamera und/oder einen Radar-Sensor und/oder einen Lidar-Sensor, umfasst. Wie bereits ausgeführt, können dabei insbesondere die Daten des Umfeldsensors zur Plausibilisierung der zweiten Sensordaten benutzt werden.

Weitere Vorteile und Einzelheiten der vorliegenden Erfindung ergeben sich aus den im Folgenden beschriebenen Ausführungsbeispielen sowie anhand der Zeichnung. Dabei zeigen:
- Fig. 1: ein erfindungsgemäßes Kraftfahrzeug, und
- Fig. 2: eine mögliche Unfallsituation bei einem Unterfahrt-Unfall.

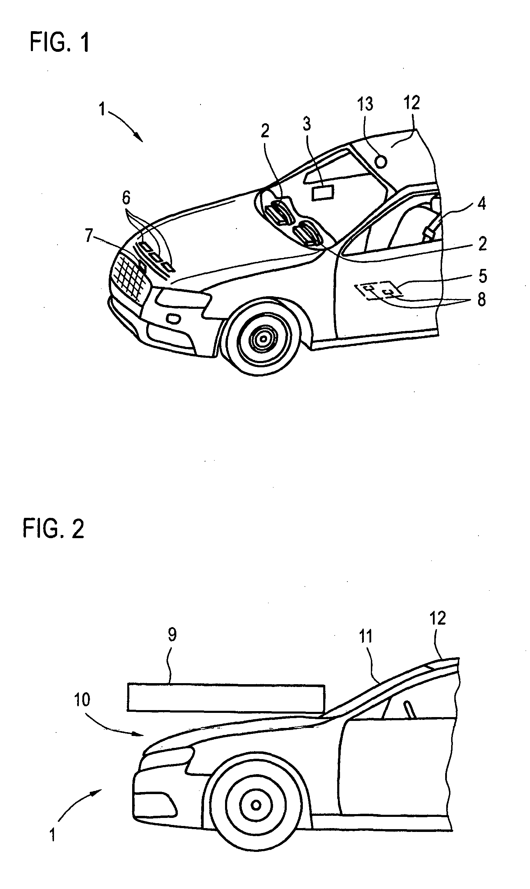

Fig. 1 zeigt ein erfindungsgemäßes Kraftfahrzeug 1, einen PKW. Zum Schutz von Insassen bei einem Unfall mit einer Kollision sind dabei Insassenrückhaltesysteme vorgesehen, von denen vorliegend Frontairbags 2, Seitenairbags 3 und Gurtstraffer 4 angedeutet sind. Zur Ansteuerung dieser Insassenrückhaltesysteme 2, 3, 4 ist ein gemeinsames Steuergerät 5 vorgesehen, welches ständig überprüft, ob ein Unfall vorliegt (Unfallinformation) und gegebenenfalls einen Unfallschwerewert ermittelt, der die Schwere des Unfalls angibt. Dazu dienen dem Steuergerät 5 zunächst erste, unfallbezogene Sensordaten, die vorliegend anhand von ersten Kriterien beurteilt werden, um die Unfallinformation oder den Unfallschwerewert zu ermitteln. Lediglich beispielhaft sind als erste Sensordaten liefernde erste Sensoren Satellitensensoren 6 am Vorderwagen, ein Umfeldsensor 7, beispielsweise eine Kamera, und zwei im Steuergerät 5 selbst angeordnete Beschleunigungssensoren 8, von denen einer die Beschleunigung in Fahrzeuglängsrichtung, der andere die Beschleunigung in Fahrzeugquerrichtung misst, angedeutet. Diese befinden sich - wie das Steuergerät 5 - im Wesentlichen im oder nahe des Fahrzeugschwerpunkts. Diese ersten Sensordaten sind in jedem Fall geeignet, um einen Frontalunfall zu sensieren und entsprechende Schutzmaßnahmen für die Insassen des Kraftfahrzeugs 1 einzuleiten.

Dabei steuert das Steuergerät 5 die Insassenrückhaltesysteme 2, 3 und 4 im vorliegenden Ausführungsbeispiel anhand von Aktivierungsschwellwerten an, die der Unfallschwerewert jeweils überschreiten muss.

Fig. 2 zeigt schematisch die Situation bei einem sogenannten Unterfahrt-Unfall, bei dem wie ersichtlich die Ladekante 9 eines LKW den Vorderwagen 10 des Kraftfahrzeugs 1 überragt und somit unmittelbar mit der Windschutzscheibe 11 kollidiert, dass die erste Verformung im Dachbereich 12 des Kraftfahrzeugs 1 auftritt, während die im Vorderwagen bzw. Fahrzeugschwerpunkt angeordneten ersten Sensoren 6, 8, zunächst kaum relevante Veränderungen messen werden.

Damit Unterfahrt-Unfälle jedoch auch beim erfindungsgemäßen Kraftfahrzeug 1 korrekt zu einer Aktivierung der Insassenrückhaltesysteme 2, 3, 4 führen, ist zusätzlich ein zweiter Sensordaten liefernder Dachsensor 13 am Dachquerträger des Kraftfahrzeugs 1 vorgesehen. Dabei handelt es sich um einen Beschleunigungssensor, der die Beschleunigung entlang der Normalen der Windschutzscheibe 11 misst, da in dieser Richtung, vergleiche Fig. 2, durch einen Unterfahrt-Unfall die stärksten Beschleunigungen vorliegen.

Das Steuergerät 5 ist nun zur Nutzung der zweiten Sensordaten des Dachsensors 13 ausgebildet, indem diese - insbesondere, wenn die dort gemessene Beschleunigung selbst einen Schwellwert überschreitet - genutzt werden, um die genannten Aktivierungsschwellwerte herabzusetzen. Das bedeutet, dass selbst, wenn nur geringe Verformungen im Vorderwagen 10 des Kraftfahrzeugs 1 auftreten, es zu einer Aktivierung der Insassenrückhaltesysteme 2, 3, 4 kommen kann, wenn die zweiten Sensordaten anzeigen, dass vermutlich ein Unterfahrt-Unfall vorliegt. Es sei an dieser Stelle angemerkt, dass selbstverständlich auch komplexere Ansteuerungsschemata denkbar sind, beispielsweise, indem die zweiten Sensordaten zu einer Anpassung der ersten Kriterien genutzt werden oder diese unmittelbar in die Ermittlung der Unfallinformation und des Unfallschwerewerts eingehen.

Schließlich ist beim erfindungsgemäßen Kraftfahrzeug 1 vorgesehen, die Sensordaten des Umfeldsensors 7 mitzubeachten, der durch die bekannte Klassifizierung von Objekten ebenso auf einen Unterfahrt-Unfall hinweisen kann, so dass hier eine Plausibilitätsüberprüfung möglich ist.

Es sei angemerkt, dass auch der Umfeldsensor 7 als erste Sensordaten liefernder Sensor berücksichtigt werden kann.

## Patentansprüche

1. Verfahren zur Steuerung von wenigstens einem Insassenrückhaltesystem eines Kraftfahrzeugs, insbesondere wenigstens eines Airbags und/oder wenigstens eines Gurtstraffers und/oder eines Überrollbügels, wobei durch Beurteilung von ersten Sensordaten anhand wenigstens eines ersten Kriteriums eine das Vorliegen eines Unfalls angebende Unfallinformation und/oder ein Unfallschwerewert ermittelt und das Insassenrückhaltesystem unter Berücksichtigung der Unfallinformation und/oder des Unfallschwerewerts angesteuert wird, wobei zweite Sensordaten wenigstens eines im Dachbereich des Kraftfahrzeugs angeordneten, unfallbezogenen Dachsensors ermittelt und bei der Steuerung des Insassenrückhaltesystems berücksichtigt werden,
**dadurch gekennzeichnet,**
**dass** als Dachsensor ein Beschleunigungssensor verwendet wird, wobei der Dachsensor als zweite Sensordaten die Beschleunigung in einer senkrecht zur Windschutzscheibe des Kraftfahrzeugs stehenden Richtung ermittelt.

2. Verfahren nach Anspruch 1, **dadurch gekennzeichnet, dass** die zweiten Sensordaten, insbesondere nach Beurteilung durch wenigstens ein zweites Kriterium, zur Anpassung des oder wenigstens eines ersten Kriteriums und/oder wenigstens eines Aktivierungsschwellwerts für den Unfallschwerewert verwendet werden.

3. Verfahren nach Anspruch 1 oder 2, **dadurch gekennzeichnet, dass** als Dachsensor ein am Dachquerträger des Kraftfahrzeugs angeordneter Sensor verwendet wird.

4. Verfahren nach einem der vorangehenden Ansprüche, **dadurch gekennzeichnet, dass** zur Steuerung ein wenigstens einem Insassenrückhaltesystem zugeordnetes Steuergerät mit zwei in dem Steuergerät angeordneten, insbesondere die Beschleunigung in Querrichtung und in Längsrichtung des Kraftfahrzeugs messenden, erste Sensordaten liefernden Beschleunigungssensoren verwendet wird.

5. Verfahren nach Anspruch 4, **dadurch gekennzeichnet, dass** die zweiten Sensordaten zur Anpassung von Schwellwerten der ersten Sensordaten verwendet werden.

6. Verfahren nach einem der vorangehenden Ansprüche, **dadurch gekennzeichnet, dass** bei der Ermittlung der Unfallinformation und/oder des Unfallschwerewerts als erste Sensordaten auch Daten wenigstens eines Umfeldsensors des Kraftfahrzeugs, insbesondere einer Kamera und/oder eines Radar-Sensors und/oder eines Lidar-Sensors, berücksichtigt werden.

7. Verfahren nach Anspruch 6, **dadurch gekennzeichnet, dass** ein das Vorliegen eines Unterfahrt-Unfalls anzeigender Wert aus den Daten des Umfeldsensors ermittelt und insbesondere im Rahmen einer Plausibilitätsprüfung von zweiten Sensordaten verwendet wird.

8. Kraftfahrzeug (1), umfassend wenigstens ein Insassenrückhaltesystem (2, 3, 4), wenigstens einen ersten Sensor (6, 7, 8) zur Aufnahme unfallbezogener erster Sensordaten, wenigstens einen im Dachbereich (12) des Kraftfahrzeugs (1) angeordneten Dachsensor (13) zur Aufnahme unfallbezogener zweiter Sensordaten und wenigstens ein wenigstens einem Insassenrückhaltesystem (2, 3, 4) zugeordnetes, insbesondere zur Durchführung des Verfahrens nach einem der Ansprüche 1 bis 9 ausgebildetes Steuergerät (5), welches Steuergerät (5) zur Ansteuerung des Insassenrückhaltesystems (2, 3, 4) unter Berücksichtigung der ersten und der zweiten Sensordaten ausgebildet ist,
**dadurch gekennzeichnet,**
**dass** der Dachsensor (13) ein Beschleunigungssensor ist, der zur Messung der Beschleunigung in einer senkrecht zur Windschutzscheibe (11) des Kraftfahrzeugs (1) stehenden Richtung ausgebildet ist.

9. Kraftfahrzeug nach Anspruch 8, **dadurch gekennzeichnet, dass** der Dachsensor (13) am Dachquerträger des Kraftfahrzeugs (1) angeordnet ist.

10. Kraftfahrzeug nach Anspruch 8 oder 9, **dadurch gekennzeichnet, dass** in dem Steuergerät (5) zwei insbesondere die Beschleunigung in Querrichtung und in Längsrichtung des Kraftfahrzeugs (1) messende, erste Sensordaten liefernde Beschleunigungssensoren (8) angeordnet sind und/oder das Kraftfahrzeug (1) wenigstens einen erste Sensordaten liefernden Umfeldsensor (7), insbesondere eine Kamera und/oder einen Radar-Sensor und/oder einen Lidar-Sensor, umfasst.

## Claims

1. Method for controlling at least one occupant restraint system of a motor vehicle, particularly at least one airbag and/or at least one seat belt tightener and/or an antiroll bar, wherein by evaluating first sensor data on the basis of at least one first criterion, accident information indicating the occurrence of an accident and/or an accident severity value is determined and the occupant restraint system is actuated in consideration of the accident information and/or the accident severity value, while second sensor data from at least one accident-related roof sensor arranged in the roof region of the motor vehicle are determined and are taken into account in the control of the occupant restraint system,
**characterised in that**
an acceleration sensor is used as the roof sensor, the roof sensor determining, as second sensor data, the acceleration in a direction perpendicular to the windscreen of the motor vehicle.

2. Method according to claim 1, **characterised in that** the second sensor data are used, particularly after evaluation by means of at least one second criterion, for adapting the or at least a first criterion and/or at least one activation threshold for the accident severity value.

3. Method according to claim 1 or 2, **characterised in that** a sensor arranged on the roof crossmember of the motor vehicle is used as the roof sensor.

4. Method according to one of the preceding claims, **characterised in that** a control device associated with at least one occupant restraint system and having two acceleration sensors that are arranged in the control device and in particular measure the acceleration in the transverse direction and in the longitudinal direction of the motor vehicle and supply first sensor data is used for the control.

5. Method according to claim 4, **characterised in that** the second sensor data are used to adapt threshold values of the first sensor data.

6. Method according to one of the preceding claims, **characterised in that** when determining the accident information and/or the accident severity value, data from at least one ambient environment sensor of the motor vehicle, particularly a camera and/or a radar sensor and/or a Lidar sensor, are also taken into consideration as first sensor data.

7. Method according to claim 6, **characterised in that** a value indicating the occurrence of an underride accident is determined from the data obtained from the ambient environment sensor and is used in particular within the scope of a plausibility testing of second sensor data.

8. Motor vehicle (1), comprising at least one occupant restraint system (2, 3, 4), at least one first sensor (6, 7, 8) for receiving accident-related first sensor data, at least one roof sensor (13) arranged in the roof region (12) of the motor vehicle (1) for receiving accident-related second sensor data, and at least one control device (5) associated with at least one occupant restraint system (2, 3, 4) and configured in particular to carry out the method according to one of claims 1 to 9, said control device (5) being configured to actuate the occupant restraint system (2, 3, 4), taking into account the first and second sensor data,
**characterised in that**
the roof sensor (13) is an acceleration sensor that is configured to measure the acceleration in a direction perpendicular to the windscreen (11) of the motor vehicle (1).

9. Motor vehicle according to claim 8, **characterised in that** the roof sensor (13) is arranged on the roof crossmember of the motor vehicle (1).

10. Motor vehicle according to claim 8 or 9, **characterised in that** two acceleration sensors (8) that supply first sensor data and measure in particular the acceleration in the transverse direction and in the longitudinal direction of the motor vehicle (1) are arranged in the control device (5) and/or the motor vehicle (1) comprises at least one ambient environment sensor (7) that supplies first sensor data, particularly a camera and/or a radar sensor and/or a Lidar sensor.

## Revendications

1. Procédé de commande d'au moins un système de retenue de passagers d'un véhicule automobile, en particulier d'au moins un coussin d'air et/ou d'au moins un tendeur de ceinture et/ou d'un arceau de sécurité, dans lequel, par évaluation de premières données de capteur, à l'appui d'au moins un premier critère, on détermine une information d'accident indiquant l'occurrence d'un accident et/ou la gravité de l'accident et le système de retenue de passagers est commandé en tenant compte de l'information d'accident et/ou de la gravité de l'accident, dans lequel on détermine de secondes données de capteur issues au moins d'un capteur de toit agencé dans la zone de toit du véhicule automobile et qui a trait aux accidents et on en tient compte dans la commande du système de retenue de passagers,
**caractérisé en ce que**
l'on utilise comme capteur de toit un capteur d'accélération, dans lequel le capteur de toit détermine comme secondes données de capteur l'accélération dans une direction perpendiculaire au pare-brise du véhicule automobile.

2. Procédé selon la revendication 1, **caractérisé en ce que** les secondes données de capteur sont utilisées, en particulier après évaluation par au moins un second critère, pour adapter le ou au moins un premier critère et/ou au moins une valeur de seuil d'activation pour la gravité de l'accident.

3. Procédé selon la revendication 1 ou la revendication 2, **caractérisé en ce que** l'on utilise comme capteur de toit un capteur agencé sur la poutre transversale de toit du véhicule automobile.

4. Procédé selon l'une quelconque des revendications précédentes, **caractérisé en ce que**, pour la commande, on utilise un appareil de commande affecté à au moins un système de retenue de passagers avec deux capteurs d'accélération agencés dans l'appareil de commande et délivrant des premières données de capteur mesurant en particulier l'accélération dans la direction transversale et dans la direction longitudinale du véhicule automobile.

5. Procédé selon la revendication 4, **caractérisé en ce que** les secondes données de capteur sont utilisées pour adapter les valeurs de seuil des premières données de capteur.

6. Procédé selon l'une quelconque des revendications précédentes, **caractérisé en ce que**, lors de la détermination de l'information d'accident et/ou de la gravité de l'accident comme premières données de capteur, on tient également compte de données d'au moins un capteur ambiant du véhicule automobile, en particulier une caméra et/ou un capteur radar et/ou un capteur lidar.

7. Procédé selon la revendication 6, **caractérisé en ce qu'**une valeur indiquant l'occurrence d'un accident de la circulation est déterminée à partir des données du capteur ambiant et est utilisée en particulier dans le cadre d'un test de plausibilité de secondes données de capteur.

8. Véhicule automobile (1), comprenant au moins un système de retenue de passagers (2, 3, 4), au moins un premier capteur (6, 7, 8) pour recevoir des premières données de capteur se rapportant aux accidents, au moins un capteur de toit (13) agencé dans la zone de toit (12) du véhicule automobile (1) pour recevoir des secondes données de capteurs se rapportant à l'accident et au moins un appareil de commande (5) affecté au moins à un système de retenue de passagers (2, 3, 4), en particulier conçu pour réaliser le procédé selon l'une quelconque des revendications 1 à 9, lequel appareil de commande (5) est conçu pour commander le système de retenue de passagers (2, 3, 4) en tenant compte des premières et secondes données de capteurs,
**caractérisé en ce que**
le capteur de toit (13) est un capteur d'accélération qui est conçu pour mesurer l'accélération dans une direction qui est perpendiculaire au pare-brise (11) du véhicule automobile (1).

9. Véhicule automobile selon la revendication 8, **caractérisé en ce que** le capteur de toit (13) est agencé sur la poutre transversale du toit du véhicule automobile (1).

10. Véhicule automobile selon la revendication 8 ou la revendication 9, **caractérisé en ce qu'**il est agencé dans l'appareil de commande (5) deux capteurs d'accélération (8) mesurant en particulier l'accélération dans la direction transversale et dans la direction longitudinale du véhicule automobile (1) et délivrant des premières données de capteurs et/ou le véhicule automobile (1) comprend au moins un premier capteur ambiant (7) délivrant des premières données de capteurs, en particulier une caméra et/ou un capteur radar et/ou un capteur lidar.
